Europäisches Patentamt

European Patent Office

Office européen des brevets

(11) Veröffentlichungsnummer : **0 492 334 B1**

(12) # EUROPÄISCHE PATENTSCHRIFT

(45) Veröffentlichungstag der Patentschrift :
**17.08.94 Patentblatt 94/33**

(51) Int. Cl.$^5$ : **C01F 7/02**

(21) Anmeldenummer : **91121510.1**

(22) Anmeldetag : **16.12.91**

(54) **Verfahren zur Herstellung ionenleitender Keramik.**

(30) Priorität : **27.12.90 DE 4041890**

(43) Veröffentlichungstag der Anmeldung :
**01.07.92 Patentblatt 92/27**

(45) Bekanntmachung des Hinweises auf die
Patenterteilung :
**17.08.94 Patentblatt 94/33**

(84) Benannte Vertragsstaaten :
**DE FR GB**

(56) Entgegenhaltungen :
**DE-A- 3 902 175**
**US-A- 4 193 954**
**US-A- 4 339 511**

(73) Patentinhaber : **ABB PATENT GmbH**
**Kallstadter Strasse 1**
**D-68309 Mannheim (DE)**

(72) Erfinder : **Hartung, Rüdiger**
**Friedelstrasse 52**
**W-1000 Berlin 44 (DE)**

(74) Vertreter : **Rupprecht, Klaus, Dipl.-Ing. et al**
**c/o ABB Patent GmbH,**
**Postfach 10 03 51**
**D-68128 Mannheim (DE)**

EP 0 492 334 B1

## Beschreibung

Die Erfindung bezieht sich auf ein Verfahren zur Herstellung von ionenleitender Keramik aus Aluminiumübergangsoxiden gemäß dem Oberbegriff des Patentanspruches 1.

Natrium-Beta"-Aluminiumoxid (Na-Beta"-Al$_2$O$_3$) wird beispielsweise zur Herstellung von Festelektrolyten verwendet, die als natriumionenleitende Wände in elektrochemische Speicherzellen eingebaut werden. Das für die Fertigung von Festelektrolyten verwendete Natrium-Beta"-Aluminiumoxid muß sich in einem stabilisierten Zustand befinden, da es sonst bei der Sinterung der Festelektrolyte, die bei Temperaturen oberhalb von 1550°C durchgeführt wird, thermisch instabil wird, und in weniger leitfähiges Beta-Aluminiumoxid sowie Delta-Na-Aluminiumoxid übergeht. Die Herstellung von stabilisiertem Natrium-Beta"-Aluminiumoxid mit hoher Natriumionenleitfähigkeit ist auch heute noch mit Schwierigkeiten verbunden.

Aus der DE-A-3 902 175 ist ein Verfahren zur Herstellung von stabilisiertem Natrium-Beta"-Aluminiumoxid bekannt. Hierfür wird ein Dotierungsmetalloxid aus der Gruppe von Li$_2$O, MgO, ZnO, CoO, NiO, FeO oder ein Gemisch hiervon in einem kubisch dichtest gepackten Aluminiumoxid oder einem Vorläufer davon unter Bildung eines Ausgangsgemischs verteilt. Anschließend wird dieses Gemisch erhitzt und in einer sauerstoffhaltigen Atmosphäre calciniert. Im Anschluß daran wird homogenes Natriumoxid in dem calcinierten Ausgangsgemisch zur Bildung eines Endgemischs verteilt. Dieses wird in einer sauerstoffhaltigen Atmosphäre auf eine Temperatur von mindestens 1100° C unter Bildung von Beta"-Aluminiumoxid erhitzt.

Aus der Informationsschrift JPN. J. APPL. PHYS. 1972, Band 11, Teil 1, Seite 180-185 von A. Imai et al. ist bereits bekannt, daß zur Stabilisierung von Natrium Beta"-Aluminoxid vor dem Sintern eine Dotierung mit Mg, Zn, Cu, Ni oder Ca vorgenommen werden muß.

In der US-A-4339511 ist die Herstellung eines Pulvers beschrieben, das als Basismaterial für die Herstellung von Beta oder Beta-"Aluminiumoxid Verwendung findet. Hierfür wird eine Suspension aus Bayerit gebildet. Dieser wird eine Magnesium, Lithium oder Natrium haltige Lösung zur Bildung eines Gels beigemischt. Dieses wird zur Herstellung eines Pulvers über die Siedetemperatur von Wassers hinaus erhitzt und anschließend gemahlen. Das so gewonnene Pulver wird anschließend nochmals einer Wärmebehandlung bei 350°C bis 900°C unterzogen.

Der Erfindung liegt die Aufgabe zugrunde, ein Verfahren aufzuzeigen, welches sich für die direkte Reaktionssinterung mit hoher Aufheizrate eignet, und die Herstellung von stabilisiertem Beta"-Aluminiumoxid in kürzester Zeit ermöglicht.

Diese Aufgabe wird erfindungsgemäß durch die Merkmale des Patentanspruches 1 gelöst.

Als Ausgangsmaterial werden ein Aluminiumübergangsoxid oder Gemische hiervon verwendet. Bevorzugt werden Chi-, Kappa-, Gamma-, Delta-, Theta- oder Eta-Aluminiumübergangsoxide benutzt. Als Ausgangsmaterial kann auch von Aluminiumoxidhydroxiden (z. B. Böhmit), oder Aluminiumhydroxiden (z. B. Gibbsit oder Bayerit) ausgegangen werden, die dann durch thermische Dehydroxilierung bei einer Temperatur von 250 bis 1150°C in die obengenannten Aluminiumübergangsoxide umgesetzt werden. Zur Weiterbehandlung werden die Aluminiumübergangsoxide in ein Pulver mit einer Korngröße von 0,1 µm bis 5 µm umgesetzt. Eine phasenstabilisierende Dotierungskomponente in Form einer einzigen oder einer Mischung chemischer Verbindungen, die als Komponente Magnesium, Lithium, Zink, Kobalt, Nickel oder Eisen enthalten und in einem Lösungsmittel voll löslich sind, werden zusammen mit dem Aluminiumübergangsoxid zu einem Schlicker verarbeitet. Vorzugsweise werden solche Dotierungskomponenten verwendet, die vollständig in Wasser oder einem Aklohol löslich sind. Die Menge der verwendeten Dotierungskomponente wird so gewählt, daß ihr Anteil 0,05 bis 10 Masse% an den Oxidphasen der gesinterten Natrium-Beta"-Aluminiumoxid Keramik beträgt. Aus einer definierten Menge an Aluminiumübergangsoxiden, Dotierungskomponenten und der entsprechenden Menge an Lösungsmittel, wobei Wasser bevorzugt verwendet wird, wird ein Schlicker gebildet. Dieser Schlicker wird gemahlen und anschließend getrocknet. Das so gewonnene Pulver wird in die Lösung einer Natriumverbindung eingerührt. Die Menge an Feststoffen wird wo gewählt, daß wiederum ein Schlicker gebildet wird, der gemahlen werden kann. Das Mahlen der beiden Schlicker dient zum einen dazu, ein Pulver mit einer Korngröße kleiner 5 µm auszubilden, und zum anderen die Bildung von Agglomeraten zu verhindern. Die Trocknung beider Schlicker kann durch Sprüh-, Gefrier- oder Wirbelschichttrocknung erfolgen. Falls die Dotierungskomponente durch die natriumhaltige Lösung nicht ausgefällt wird, besteht die Möglichkeit, auf die Ausbildung eines zweiten Schlickers zu verzichten und die Natriumlösung gleich dem ersten Schlicker beizumischen. Wird als Dotierungskomponente eine metallorganische Verbindung verwendet, so muß der organische Anteil vor der zweiten Schlickerbildung in einer sauerstoffhaltigen Atmosphäre bei Temperatruren von 300 bis 600° ausgebrannt werden. Mit Hilfe der löslichen Dotierungskomponente werden phasenstabilisierende Kationen gleichmäßig auf der Oberfläche des Aluminiumübergangsoxids und auch auf den Innenflächen seiner Poren abgeschieden. Hierdurch kann ihr Einbau bei der Sinterung wesentlich erleichtert und die Leitfähigkeit beträchtlich erhöht. Mit Hilfe der natriumhaltigen Lösung, vorzugsweise Natronlauge, wird eine zusätzliche und gleichmäßige Anlagerung von Natriumionen auf der gesamten Oberfläche bewirkt und die phasenstabilisierenden Kationen auf der Oberfläche fixiert. Der Feststoffanteil der Suspension wird entsprechend der Anforderungen der weiteren Verarbeitungsschritte, insbesondere der Trocknung eingestellt. Aus dem Feststoffgehalt und dessen Zusammensetzung ergibt sich die notwendige Konzentration an gelösten Komponenten, die erforderlich ist, um über die Reaktionssinterung zu der angestrebten β″-Aluminiumoxidphase zu gelangen. Ein geringer Überschuß an Natrium kann zur Bildung eines die Sinterung fördernden $\vartheta$-NaAlO$_2$/β″-Al$_2$O$_3$ Eutektikums führen. Aufgrund der oben beschriebenen Verfahrensschritte werden die die Phasenstabilisierung und die Leitfähigkeit fördernden Komponenten auf der Oberfläche und den Poreninnenflächen des Aluminiumübergangsoxids so gleichmäßig verteilt aufgebracht, daß eine Calcinierung zur weiteren Homogenisierung der Komponente nicht erforderlich ist. Weitere erfindungswesentliche Merkmale sind in den Unteransprüchen offenbart.

Das erfindungsgemäße Verfahren wird nachfolgend näher erläutert.

Zur Herstellung von stabilisiertem einphasigem polykristallinem Natrium-Beta″-Aluminiumoxid wird von einem Aluminiumübergangsoxid oder einem Gemisch von verschiedenen Aluminiumübergangsoxiden ausgegangen. Diese Aluminiumübergangsoxide können auch erst aus Aluminiumoxidhydraten oder Aluminiumhydroxiden durch Dehydroxilierung hergestellt werden. Ausgangsmaterialien sind hierfür vorzugsweise Böhmit, Gibbsit und Bayerit. Für die Herstellung des stabilisierten Beta″-Aluminiumoxids werden bevorzugt Chi-, Kappa-, Gamma-, Delta-, Theta- oder Eta-Aluminiumoxide verwendet. Durch die Dehydroxilierung weisen diese Aluminiumoxide Poren auf. Die Größe dieser Poreninnenflächen beträgt bis zu 200 m²/g. Zur Erzielung eines phasenstabilisierten Natrium-Beta″-Aluminiumoxids werden erfindungsgemäß die Außenflächen und die Innenflächen der Poren dieses Ausgangsmaterials mit einer Imprägnierungsschicht versehen. Ziel dieser Imprägnierungsschicht ist es, auf den obengenannten Flächen eine gleichmäßige Verteilung von phasenstabilisierenden und die Ionenleitfähigkeit fördernden Komponenten zu erhalten, die bei einer späteren Reaktionssinterung des Ausgangsmaterials in das Kristallgitter der Aluminiumübergangsoxide eingebaut werden. Zur Erzielung der gewünschten Phasenstabilität eignen sich insbesondere Kationen von Magnesium, Lithium, Zink, Kobalt, Nickel und Eisen. Besonders geeignet sind Kationen von Magnesium und Lithium.

Zur Ausbildung der gewünschten Imprägnierungsschicht auf den Innenflächen der Poren und auf den Außenflächen des Ausgangsmaterials wird aus einer chemischen Verbindung, die beispielsweise Magnesium oder Lithium als Komponente enthält, eine Lösung hergestellt. Hierzu wird eine chemische Verbindung ausgewählt, die beispielsweise in Wasser vollständig löslich ist. Als Lösungsmittel können andererseits auch Alkohole oder sonstige Lösungsmittel verwendet werden, in denen sich die ausgewählte chemische Verbindung vollständig lösen läßt. Die ausgewählte chemische Verbindung muß zusätzlich in einer sauerstoffhaltigen Atmosphäre bei maximal 900°C unter Umwandlung in entsprechende Oxide zersetzbar sein. Das ausgewählte Aluminiumübergangsoxid bzw. Gemische aus verschiedenen der eingangs genannten Aluminiumübergangsoxiden werden zu einem Pulver mit einer Korngröße von unter 5 µm gemahlen. Nicht stabilisiertes Natrium-Beta″-Aluminiumoxid kann mit der Strukturformel Na$_2$O·-xAl$_2$O$_3$ dargestellt werden, wobei x einen Wert zwischen 5 und 7 annehmen kann. Die Elementarzelle des hexagonalen Natrium-Beta″-Aluminiumoxids ist in kristallographischer c-Richtung aus drei (Al$_{11}$O$_{16}$)$^+$ - Spinellblöcken aufgebaut, unterbrochen von zwei (NaO)$^-$ - Ebenen, welche für die Natriumionenleitfähigkeit verantwortlich sind. Durch den Einbau der Dotierungskationen wird neben einer Phasenstabilisierung gleichzeitig der Anteil an Natriumionen in den Leitfähigkeitsebenen erhöht, und damit der spezielle elektrische Innenwiderstand der β″-Al$_2$O$_3$ -Keramik herabgesetzt. Ein maximaler Anteil an Dotierungselementen im β″-Al$_2$O$_3$ Gitter ist deshalb erstrebenswert. Zur Erzielung einer gleichmäßigen Verteilung von phasenstabilisierenden Kationen, die beispielsweise durch Magnesium gebildet werden, wird Magnesiumnitrathexahydrat (Mg(NO$_3$)$_2$x6H$_2$O) in Wasser gelöst. Als Aluminiumübergangsoxid wird Gamma-Aluminiumoxid verwendet. Das Mengenverhätnis Aluminiumoxid zu Magnesiumverbindung als Dotierungskomponente beträgt 3,08:1. Aus dem Dotierungsmittel, dem Aluminiumübegangsoxid und Wasser als Lösungsmittel wird ein Schlicker gebildet. Für die Ausbildung des Schlickers beträgt das Mengenverhältnis Wasser : Feststoffanteil mindestens 2,33:1. Der aus den obengenannten Ausgangsmaterialen hergestellte Schlicker wird naß gemahlen, so daß nach dem Trocknen ein Pulver mit einer Korngröße kleiner 5 µm vorliegt. Das so gewonnene Pulver wird anschließend getrocknet. Hierfür bietet sich eine Sprühtrocknung an. Die Außenflächen des nun vorliegenden Pulvers sowie die Innenflächen seiner Poren werden nun mit einer weiteren Imprägnierung in Form von als Zweitkomponente dienenden Alkalmetallionen versehen. Hierdurch sollen zum einen die bereits aufgebrachten und gleichmäßig verteilten Kationen an den Flächen fixiert und die Alkalimetallionen ebenfalls gleichmäßig auf der Oberfläche verteilt werden. Zu diesem Zweck wird das Pulver in eine Natronlauge eingerührt. Aus den obengenannten Materialien wird ein weiterer Schlicker gebildet. Das Mengenverhältnis Feststoffanteil zu Flüssigkeitsanteil richtet sich nach der Konzentration der Natronlauge. Für die Bildung des Schlickers wird eine 0,5 normale wässrige Natronlaugenlösung verwendet. Der durch Rühren hergestellte Schlicker wird anschließend naß gemahlen, so daß das Pulver mit einer Korngröße von kleiner 5 µm ausgebildet wird. Durch die Natriumionen werden die bereits auf den Poreninnenflächen und den Außenflächen des Pulvers angeordneten Kationen in Form von unlöslichen Magnesiumverbindungen dauerhaft auf der Oberfläche fixiert. Das so gewonnene Pulver kann nun zur Herstellung von Festelektrolyten dienen, die als natriumionenleitende Wände in Speicherzellen eingebaut werden. Die aus dem Pulver hergestellten Grünkörper werden einer Reaktionssinterung bis zu einer Temperatur von 1650°C unterzogen. Hierbei werden die an die Poreninnenflächen und Außenflächen des keramischen Materials angelagerten phasenstabilisierenden Kationen sowie die Natriumionen in das Kristallgitter eingebaut. Durch die optimale Verteilung der phasenstabilisierenden Kationen wird deren Einbau in das Kristallgitter gefördert. Hierdurch wird deren Anteil an der $\beta''$-Aluminiumoxid-Phase stark erhöht. Dadurch können ebenfalls mehr Natriumionen in das Gitter eingebaut werden, was die Leitfähigkeit der Keramik stark erhöht. Das mit Magnesiumionen stabilisierte Natrium-Beta''-Aluminiumoxid kann durch folgende Gleichung dargestellt werden:

$$Na_{1+z}Mg_zAl_{11-z}O_{17}.$$

z kann dabei einen maximalen Wert von 2/3 annehmen. Erfolgt die Phasenstabilisierung durch Lithiumionen, so läßt sich das stabilisierte Natrium-Beta''-Aluminiumoxid folgendermaßen darstellen:

$$Na_{1+z}Li_{0.5z}Al_{11-0.5z}O_{17},$$

wobei z wiederum den Wert 2/3 annehmen kann. Bei der Ausbildung der Imprägnierungsschicht besteht die Möglichkeit, einen geringen Natriumüberschuß von 1 bis 5 % zur Einleitung der Flüssigphasensinterung einzustellen. Bei dem oben beschriebenen Beispiel, bei dem Magnesiumionen zur Phasenstabilisierung verwendet wurden, weist die aus dem gewonnenen Pulver gepreßte Keramik nach einer Reaktionssinterung bei 1650°C folgende Zusammensetzung auf:

$$Na_{1.67}Mg_{0.67}Al_{10.33}O_{17}.$$

Wird für die Phasenstabilisierung eine Dotierungskomponente verwendet, welche von der Natriumkomponente nicht ausgefällt werden kann, so besteht die Möglichkeit, auf die Bildung des zweiten Schlickers zu verzichten. Die Natriumkomponente kann dann gleich mit in die Zubereitung des ersten Schlickers integriert werden. Wird die zur Phasenstabilisierung vorgesehene Dotierungskomponente aus einer metallorganischen Verbindung gewonnen, so müssen ebenfalls zwei Schlicker ausgebildet werden, da nach der Fertigstellung des ersten Schlickers und dessen Trocknung ein Ausbrennen des organischen Anteils unter sauerstoffhaltiger Atmosphäre bei Temperaturen von 200 bis 600°C durchgeführt werden muß. Dies ist deshalb erforderlich, damit das innere Porenvolumen für die gleichmäßige Verteilung der Natriumkomponenten auf den Innenflächen der Poren wieder zugänglich gemacht wird.

## Patentansprüche

1. Verfahren zur Herstellung von stabilisiertem Natrium-Beta''-Aluminiumoxid aus Aluminiumübergangsoxiden mit Spinelldefektstruktur, **dadurch gekennzeichnet,** daß auf den Oberflächen und den Innenflächen der Poren von pulverförmigem Aluminiumübergangsoxid oder einem Gemisch aus mehreren Aluminiumübergangsoxiden eine phasenstabilisierende Dotierungskomponente in Form von Kationen der Metalle Magnesium, Lithium, Zink, Kobalt, Nickel oder Eisen und zur Bildung der Ionenleitfähigkeit und der Fixierung der Dotierungskomponente auf den Oberflächen und den Innenflächen der Poren der Alumniumübergangsoxide Alkalimetallionen in gelöster Form als Zweitkomponente aufgebracht werden, daß aus den Aluminiumübergangsoxiden, der Dotierungskomponente und einem Lösungsmittel ein Schlicker gebildet wird, der die Aluminiumübergangsoxide und die Dotierungskomponente im Mengenverhältnis 3,01 : 1 enthält, daß das Mengenverhältnis von Lösungsmittel zu Feststoff mindestens 2,33 : 1 gewählt wird, und daß der Schlicker zu einer Korngröße kleiner 6,5 µm gemahlen und anschließend getrocknet und aus dem gewonnenen Pulver ein zweiter Schlikker durch Vermischen mit der Zweitkomponente gebildet, auf eine Korngröße von 5 µm gemahlen und getrocknet wird.

2. Verfahren nach Anspruch 1, dadurch gekennzeichnet, daß zur Herstellung von stabilisiertem Natrium-Beta''-Aluminiumoxid chemische Verbindungen für die Dotierungskomponente gewählt werden, die in sauerstoffhaltiger Atmosphäre bei maximal 900°C unter Umwandlung zu Oxiden zersetzt werden können, und daß die die Leitfähigkeit und die Fixierung bewirkende Zweitkomponente aus einer Laugenlösung gewonnen und ebenfalls bei maximal 900°C in Oxidformen übergeführt wird.

3. Verfahren nach einem der Ansprüche 1 oder 2, dadurch gekennzeichnet, daß zur Herstellung von stabilisiertem Natrium-Beta''-Alumniumoxid als Lösungsmittel Wasser oder Alkohol verwendet wird, und daß die Zweitkomponente aus einer Laugenlösung gewonnen wird, die Natriumionen enthält.

4. Verfahren nach einem der Ansprüche 1 bis 3, dadurch gekennzeichnet, daß zur Bildung von stabilisierten Natrium-Beta″-Aluminiumoxid beim Ausbleiben einer Ausfällung der Dotierungskomponente durch die Zweitkomponente die Laugenlösung unmittelbar in den ersten Schlicker eingerührt werden kann, wobei ein Feststoff/Flüssigkeitsverhältnis von mindestens 2,33 : 1 eingestellt wird.

5. Verfahren nach einem der Ansprüche 1 bis 4, dadurch gekennzeichnet, daß bei der Ausbildung von stabilisiertem Natrium-Beta″-Aluminiumoxid Bestandteile einer organischen Verbindung die Dotierungskomponente bilden, und daß der organische Anteil nach der Pulververbindung aus dem ersten Schlikker in einer sauerstoffhaltigen Atmosphäre bei Temperaturen zwischen 200 und 600°C ausgebrannt wird.

**Claims**

1. Process for the preparation of stabilised sodium beta″-aluminium oxide from aluminium transition oxides having a spinel defect structure, characterised in that a phase-stabilising doping component, in the form of cations of the metals magnesium, lithium, zinc, cobalt, nickel or iron, and alkali metal ions in dissolved form as the second component, to provide ion conductivity and to fix the doping component to the surfaces and the interior areas of the pores of the aluminium transition oxides, are applied to the surfaces and the interior areas of the pores of pulverised aluminium transition oxide or a mixture of a plurality of aluminium transition oxides, in that a slip is formed from the aluminium transition oxides, the doping component and a solvent, which slip contains the aluminium transition oxides and the doping component in a ratio of 3.01:1, in that the ratio of solvent to solids is chosen to be at least 2.33:1, and in that the slip is ground to a particle size smaller than 6.5 µm and subsequently dried and from the powder obtained a second slip is formed by mixing with the second component, ground to a particle size of 5 µm and dried.

2. Process according to Claim 1, characterised in that for the preparation of the stabilised sodium beta″-aluminium oxide chemical compounds are chosen for the doping component which can be decomposed to oxides in an oxygen-containing atmosphere at temperatures up to a maximum of 900°C, and in that the second component providing the conductivity and the fixation is obtained from an alkaline solution and likewise converted to oxide forms at temperatures up to a maximum of 900°C.

3. Process according to Claim 1 or 2, characterised in that for the preparation of the stabilised sodium beta″-aluminium oxide water or an alcohol is used as solvent, and in that the second component is obtained from an alkaline solution which contains sodium ions.

4. Process according to one of Claims 1 to 3, characterised in that, for the formation of the stabilised sodium beta″-aluminium oxide in the absence of any precipitation of the doping component by the second component, the alkaline solution can be stirred directly into the first slip, the solids/liquid ratio being adjusted to at least 2.33:1.

5. Process according to one of Claims 1 to 4, characterised in that, during the formation of stabilised sodium beta″-aluminium oxide, constituents of an organic compound form the doping component, and in that the organic portion is baked, after formation of the powder from the first slip, in an oxygen-containing atmosphere at temperatures between 200 and 600°C.

**Revendications**

1. Procédé de préparation de β″alumine au sodium stabilisée à partir d'oxydes d'aluminium intermédiaires présentant une structure de type spinelle défectueuse, caractérisé

en ce que l'on applique sur les surfaces extérieures et sur les surfaces intérieures des pores de l'oxyde d'aluminium intermédiaire, ou d'un mélange de plusieurs oxydes d'aluminium intermédiaires, sous forme de poudre, un composant de dopage, stabilisateur de phase, sous forme de cations des métaux comme le magnésium, le lithium, le zinc, le cobalt, le nickel ou le fer, et, pour créer une conductivité ionique et pour fixer le composant de dopage sur les surfaces extérieures et sur les surfaces intérieures des pores des oxydes d'aluminium, des ions de métaux alcalins sous forme soluble comme composant secondaire,

en ce que l'on prépare à partir des oxydes d'aluminium intermédiaires, du composant de dopage et d'un solvant, une suspension contenant les oxydes d'aluminium intermédiaires et le composant de dopage avec un rapport de 3,01/1,

en ce que le rapport de la quantité de solvant à celles des solides est choisi au moins égal à 2,33/1, et

en ce que la suspension épaisse est broyée jusqu'à obtenir une taille de grains infé-

rieure à 6,5 μm, séchée, et utilisée sous forme de poudre pour la préparation d'une deuxième suspension, par mélange avec le composant secondaire, cette deuxième suspension étant broyée jusqu'à une taille de grains de 5 μm puis séchée.

2. Procédé conforme à la revendication 1, caractérisé

   en ce que l'on utilise pour la préparation de β"-alumine au sodium stabilisée, comme composant de dopage, des composés chimiques qui, sous une atmosphère contenant de l'oxygène et à une température maximale de 900 °C, peuvent être décomposés en oxydes, et

   en ce que le composant secondaire, assurant la conductivité ionique et la fixation, est préparé à partir d'une solution alcaline et également décomposé en oxyde à une température maximale de 900 °C.

3. Procédé conforme à une des revendications 1 ou 2, caractérisé en ce que l'on utilise comme solvant pour la préparation de β"alumine au sodium stabilisée de l'eau ou de l'alcool, et en ce que le composant secondaire est préparé à partir d'une solution alcaline contenant des ions sodium.

4. Procédé conforme à une des revendications 1 à 3, caractérisé en ce que, pour la préparation de β"alumine au sodium stabilisée, en absence de précipitation du composant de dopage par le composant secondaire, il est possible d'incorporer la solution alcaline directement dans la première suspension, obtenant ainsi un rapport solide/liquide au moins égal à 2,33/1.

5. Procédé conforme à une des revendications 1 à 4, caractérisé en ce que, lors de la préparation de β"alumine au sodium stabilisée, le composant de dopage est formé de parties d'un composé organique, et que la partie organique est éliminée après la formation de poudre à partir de la première suspension par combustion à une température de 200 à 600 °C sous une atmosphère contenant de l'oxygène.